# EUROPEAN PATENT SPECIFICATION

(11) **EP 4 431 396 B1**
(45) Date of publication and mention of the grant of the patent: **18.02.2026**
(21) Application number: 24161290.2
(22) Date of filing: 04.03.2024
(51) Int. Cl.: B64D 13/06, B64D 13/08, F02C 7/00

(54) **AIR-CONDUCTING STRUCTURE FOR AN AIRCRAFT, AIR EJECTOR OR EJECTOR PUMP, AND AIRCRAFT**
LUFTLEITSTRUKTUR FÜR EIN FLUGZEUG, LUFTAUSWERFER ODER EJEKTORPUMPE UND FLUGZEUG
STRUCTURE DE GUIDAGE D'AIR POUR UN AÉRONEF, ÉJECTEUR D'AIR OU POMPE D'ÉJECTEUR, ET AÉRONEF

(30) Priority: 13.03.2023 DE 102023106153
(43) Date of publication of application: 18.09.2024
(73) Proprietor: Airbus Defence and Space GmbH, 82024 Taufkirchen (DE)
(72) Inventor: KOPP, Sven, 82024 Taufkirchen (DE); ABERLE-KERN, Svenja, 82024 Taufkirchen (DE); BREHM, Sebastian, 82024 Taufkirchen (DE)
(74) Representative: Isarpatent

(56) References cited:
- US-A1- 2009 314 004
- US-A1- 2020 025 207
- US-B2- 10 745 137

## Description

### TECHNICAL FIELD OF THE INVENTION

The present invention relates to an air-conducting structure for an aircraft. The invention also relates to an air ejector or ejector pump having such an air-conducting structure. Furthermore, the invention relates to an aircraft having such an air-conducting structure and/or such an air ejector or ejector pump.

### BACKGROUND OF THE INVENTION

In aircraft, such as aeroplanes, various airflow sources can be present, such as air from the engine bay, bleed air, for example engine bleed air, or the like. These airflow sources can be fluid-connected to air-conducting structures in order to conduct the air streams within the aircraft therewith and to eject them, for example by means of an ejector pump, to discharge air from the respective airflow source or to use the respective air stream in another way, for example for air-conditioning or the like. The air-conducting structures can also for example interact such that a pressure difference and/or momentum difference between two air streams of the respective air-conducting structure is utilized to boost one of the air streams by means of the other air stream.

US 2020/0025207 A1 describes a pre-cooler system employs a powered pre-cooler fan assembly having a fan adapted to receive bypass engine fan air through an inlet plenum with an outlet guide vane array (OGVA) adapted to control airflow from the inlet plenum and fan, with a rotational power source operationally connected to the fan. A shroud directs airflow from the inlet plenum, fan and OGVA into a pre-cooler disposed downstream of the fan and OGVA.

US 10 745 137 B2 describes an environmental control system of an aircraft includes a ram air circuit including a ram air shell having at least one heat exchanger positioned therein. A dehumidification system is arranged in fluid communication with the ram air circuit and at least one compressing device is arranged in fluid communication with the ram air circuit and the dehumidification system. The at least one compressing device includes a turbine and a compressor operably coupled via a shaft. A fan is operably coupled to the ram air circuit. At least one compressing device is arranged non-linearly with the ram air circuit such that an axis of rotation of the fan is offset from the axis of the shaft.

US 2009/0314004 A1 describes an ejector that is arranged within the engine nacelle in the forward part of the turboprop engine, with the cooling air duct appertaining to the ejector connecting at least one air intake disposed on the periphery of the engine nacelle with the interior of the engine nacelle, and with the at least one nozzle being arranged in the cooling air duct.

### SUMMARY OF THE INVENTION

The object of the invention is to improve an air-conducting structure for an aircraft with means of the simplest design possible.

This object is achieved by the subjects of the independent claims. Exemplary embodiments can be found in the dependent claims and the description below.

According to a first aspect, an air-conducting structure for an aircraft according to claim 1 is proposed.

The air-conducting structure has a first duct portion, which is configured to conduct a first air stream. In addition, the air-conducting structure has a second duct portion, which opens into the first duct portion and is configured to conduct a second air stream. Furthermore, the air-conducting structure has a vaned rotor, which is arranged in the first duct portion such that it can be driven by means of the second air stream.

This air-conducting structure allows the first air stream within the first duct portion to be effectively boosted, i.e., improved in efficiency with regard to the original function, using means of simple design. This can also be a maximized heat transfer, particularly efficient venting or the like, depending on the field of use of the air-conducting structure and/or of the air ejector or ejector pump equipped therewith. In particular, this air-conducting structure can effect a higher mass flow in the first duct portion and/or of the first air stream in comparison with a conventional air ejector or ejector pump, in particular by means of the vaned rotor. The vaned rotor can be driven solely by the second air stream and therefore does not require any further drive. The vaned rotor is for example a purely mechanical structural element and as such does not require an electrical drive. Accordingly, the air-conducting structure can also be used advantageously in portions of the aircraft with extreme influences, such as environmental influences, for example high temperatures, high humidity etc. In addition, the noise produced is reduced in comparison with an air-conducting structure based on pure intake, such as in a conventional air ejector or ejector pump, of the first air stream, and/or an ejector pump equipped therewith, without a vaned rotor, as a result of which the air-conducting structure, and/or the air ejector or ejector pump equipped therewith, can advantageously also be used close to or in an aircraft cabin or passenger cabin. The simple structural design, in particular with the for example purely mechanical, vaned rotor, makes the air-conducting structure at least largely maintenance-free. In addition, the simple structural design makes the air-conducting structure extremely robust and minimizes susceptibility to faults. As a result of the vaned rotor, the air-conducting structure can have smaller dimensions while the power remains the same, for example the air throughput remains the same. Or a higher power, for example a higher air throughput, can be achieved while the dimensions remain the same. The air-conducting structure can be used as or as a substitute for a conventional air ejector or ejector pump.

The air-conducting structure described herein can advantageously be used for many tasks for which air within an aircraft is to be conducted and/or guided somewhere from an airflow source. For example, the air-conducting structure can be used in an ejector pump, an exhaust air system, or as such in each case, in order for example to conduct air, to discharge air from an engine bay of the aircraft, or else to suck in ambient air in order for example to achieve a better cooling effect of an upstream and/or downstream heat exchanger, cooler or the like. This can be advantageous during operation of the machine or engine, for example during static operation or at low speeds of the aircraft. In this context, static operation can be understood to mean for example standing on the ground with the engine running, in which for example forced flow through a heat exchanger, cooler or the like or through an engine cell is not possible or is possible only to a limited extent owing to a higher dynamic pressure. Additionally or alternatively to this, the air-conducting structure can also be used for air exchange or air conditioning within the aircraft. For example, the air-conducting structure can be part of an air-conditioning system in which in particular the first air stream can also be temperature-controlled, i.e., cooled and/or heated. The second air stream can then be used to drive the vaned rotor in order to boost the first air stream correspondingly.

The first and second duct portions can each be fluid-connected to different airflow sources. Each duct portion can be fluid-connected to a respective airflow source. For example, the first duct portion can be assigned to a first airflow source, such as an engine bay, a bleed air or the like of the aircraft, and configured to conduct air out or away from there. In addition, the second duct portion can be fluid-connected to a second airflow source that is different from the first airflow source. For example, the second duct portion can be fluid-connected to a suitable airflow source and/or compressed air source, such as a machine, an engine, bleed air, engine bleed air or the like. The second airflow source and/or compressed air source can for example also be bleed air, engine bleed air, motor bleed air or the like. The first and second air streams can differ from one another in terms of fluidics. For example, the first and second air streams can have differing speeds, pressures, mass flows etc. The second air stream can thus be stronger or have a higher pressure than the first air stream. The first and second duct portions can have the same or differing geometries, e.g. lengths, cross sections etc. For example, they can have any desired cross sections, that is, round, oval, rectangular etc. In the region of the vaned rotor, in particular its impeller, the cross section of the first duct portion can be round. The duct portions can for example be formed from a plastic material, a metal material, for example a lightweight metal material, or the like. The opening of the second duct portion into the first duct portion can be understood to mean, for example, that the second duct portion leads into the first duct portion in some portions such that an air exit opening of the second duct portion is arranged inside the first duct portion. For example, the axial axes of the first duct portion and of the air exit opening of the second duct portion can have at least approximately the same direction. However, the axial axes can also be oriented at least approximately parallel to one another. The first duct portion can extend further after an opening point at which the second duct portion enters the first duct portion, i.e., downstream thereof, that is, have a longer length from the opening point. Additionally or alternatively to this, the second duct portion can also open into an additional outlet duct or a discharge means. In addition, the first and/or second duct portions can each have one or more fluidic elements, such as nozzles, contours, inserts or the like, in order to influence the respective first and/or second air stream fluidically.

As used herein, the vaned rotor can be understood generally to mean an externally driven turbomachine that is configured to convey a gaseous medium, in this case for example air, including exhaust air, etc. The vaned rotor can also be regarded and/or referred to as a rotor with an aerodynamic arrangement of vanes or as a type of fan. As described herein, the vaned rotor is arranged and/or configured to be drivable by means of the second air stream. The second air stream can also be the sole drive source of the vaned rotor. The vaned rotor can for example be purely mechanical and/or designed without an electrical drive or the like. The vaned rotor is arranged in the first duct portion such that it can fluidically influence the first air stream, for example the mass flow, the pressure, the speed etc. The vaned rotor can be arranged such that the first air stream flows axially or radially through it, at least in some portions. For example, the vaned rotor can be designed as a vaned rotor that acts axially, for example also as a type of axial fan. Furthermore, the vaned rotor can have a housing, a housing portion or the like. In addition, the vaned rotor can extend over a portion of the cross section of the first duct portion, for example radially, or fit into the first duct portion, that is, at least substantially fill the cross section of the first duct portion. The vaned rotor can have a drive portion, which is arranged within the effective region of the second duct portion and can be configured to convert energy in the second air stream into kinetic energy, that is, to set the vaned rotor in rotation. Consequently, the vaned rotor can convey air through the first duct portion or produce, support and/or influence the first air stream. In addition, the vaned rotor can have at least one mount and/or bearing in order to be rotatable.

In at least some variants, the vaned rotor can be configured to convey air through the first duct portion, to suck in the first air stream on an intake side, and to generate a third air stream on a pressure side. For example, the vaned rotor can be driven by the second air stream such that a favourable pressure ratio is produced between the intake side and the pressure side of the vaned rotor, i.e., the first air stream is boosted, accelerated or the like by the vaned rotor.

In at least some variants, the vaned rotor and/or the air-conducting structure can be configured to generate the third air stream with a mass flow that is greater than a mass flow of the first air stream. In other words, the air-conducting structure can boost the mass flow in the first duct portion while the second air mass flow stays the same in comparison with a conventional ejector pump that is based in particular on the intake of air or does not have the air-conducting structure proposed herein.

The vaned rotor has a drive element, which is fluid-coupled to the second duct portion. Additionally alternatively to this, the second duct portion can also open into an additional outlet duct or a discharge means. For example, the drive element can be arranged in or at an opening portion, for example an exit opening, of the second duct portion towards the first duct portion. In addition, the vaned rotor has an impeller, which is configured to convey air through the first duct portion. The impeller is fluid-coupled to the first duct portion. The first air stream can flow through the impeller axially, for example. The impeller can be directly or indirectly coupled to the drive element, so that kinetic energy generated by the second air stream at the drive element can be transmitted to the impeller in order to drive the latter within the first duct portion.

In at least some variants, the impeller can be arranged inside an internal cross section of the first duct portion. For example, the impeller can extend over a part or over at least substantially the entire internal cross section of the first duct portion. If the vaned rotor has an optional housing, housing element or the like, this can terminate with an inner wall of the first duct portion.

In at least some variants, the drive element can have a drive wheel, which is arranged in or at an opening portion, for example an exit opening, of the second duct portion towards the first duct portion. Alternatively, the drive wheel can also be regarded or referred to as a turbine wheel. The drive wheel can have a smaller effective diameter than the impeller. In other words, the drive wheel can be radially smaller than the impeller. A speed ratio can be formed between the drive element, e.g. drive wheel, and the impeller. This speed ratio can result for example from the size difference between the drive wheel and the impeller and/or from an optional gearing system or the like. Air can thus be conveyed effectively through the first duct portion using means of simple design.

In at least some variants, the drive element and the impeller can have a common rotational axis. The rotational axis can for example be oriented together with an axial axis of an exit opening of the second duct portion or coincide with same. The rotational axis can be mounted by means of a suitable mount. In this way, small overall dimensions of the air-conducting structure can be achieved.

The drive element is arranged radially inwards of the impeller. Accordingly, an exit opening of the second duct portion can likewise be arranged radially inside the first duct portion. In this way, small overall dimensions of the air-conducting structure can be achieved.

In at least some variants, the drive element and the impeller can be coupled to one another for conjoint rotation. This means that kinetic energy generated by the second air stream flowing through the drive element can be transmitted to the impeller. The drive element and the impeller can for example be connected directly or indirectly to one another or else formed as a single piece. In addition, an optional additional speed ratio can also be provided. Air can thus be conveyed effectively through the first duct portion using means of simple design.

In at least some variants, the air-conducting structure can also have at least one heat exchanger, which is configured to act thermally on at least the first air stream. For example, the heat exchanger can be designed as an air-air heat exchanger, air-liquid heat exchanger, air-oil heat exchanger, air-coolant heat exchanger, or the like. The heat exchanger can be arranged in the first duct portion, for example. For example, the heat exchanger can be arranged upstream of an opening portion of the second duct portion towards the first duct portion. The heat exchanger can for example be used as a precooler, but also as a machine cooling system, depending on the purpose for which the first and/or third air streams of the first duct portion are to be used. If the air-conducting structure is used for example as or for engine bay venting, it can also be used, by air exchange and/or air supply, to avoid the accumulation of explosive gases arising from fuel vapours, and to prevent the formation of flammable mixtures or the formation of a flame front resulting from high flow speeds, in addition to achieving a cooling effect.

In at least some variants, the air-conducting structure can also have an optional upstream guide wheel, which can also be designed, regarded and/or referred to as a type of stator. This can be arranged in the first duct portion. The upstream guide wheel can be arranged upstream of the vaned rotor, in particular of the impeller thereof. The upstream guide wheel can be used to generate a swirl in the flow, in particular in the first air stream.

In at least some variants, the air-conducting structure can have an optional downstream guide wheel, which can also be designed, regarded and/or referred to as a type of stator. This can be arranged in the first duct portion. The downstream guide wheel can be arranged downstream of the vaned rotor, in particular of the impeller thereof. The downstream guide wheel can be used to generate and/or remove a swirl in the flow, in particular in the third air stream.

In at least some variants, the air-conducting structure can also have an optional upstream turbine guide wheel, which can also be designed, regarded and/or referred to as a type of stator. This can be arranged in the second duct portion.

The upstream turbine guide wheel can be arranged upstream of the vaned rotor, in particular of the drive wheel thereof. The upstream turbine guide wheel can be used to generate and/or remove a swirl in the flow, in particular in the second air stream.

The arrangements of vaned rotor, upstream guide wheel, downstream guide wheel and/or upstream turbine guide wheel can also be designed to have two or more stages.

In at least some variants, the air-conducting structure 100 can have an optional discharge means, for example a discharge duct or the like, for the second air stream driving the vaned rotor or the drive wheel thereof. This discharge means can also be referred to as a third duct portion. The discharge means and/or the second duct portion and/or the vaned rotor can (each) be configured, for example designed and/or arranged such that the second duct portion opens fluidically into the discharge means. Via the discharge means, the corresponding air stream, that is, at least substantially the second air stream, can be discharged and optionally reused for further purposes. If the optional discharge means is provided, there is no or at least only a reduced mixing of the second air stream and the first air stream. It should be noted that, if the optional discharge means is provided, the at least one heat exchanger can also be provided or arranged downstream of the opening portion of the second duct portion into the discharge means.

A second aspect proposes an air ejector or ejector pump for an aircraft according to claim 13. An ejector pump can be formed in particular with the above-described, optional discharge means. The air ejector or ejector pump can be used for example for air exchange, for discharging exhaust air, for air supply, for air exchange, for machine cooling or engine cooling, for air-conditioning the aircraft, for avoiding the accumulation of explosive gases arising from fuel vapours, for preventing the formation of flammable mixtures or the formation of a flame front resulting from high flow speeds, and also as engine bay venting, etc. The ejector pump has at least one air-conducting structure according to the first aspect. The first duct portion is fluid-coupled to a first airflow source, and the second duct portion is fluid-coupled to a second airflow source.

For the advantages and variants of the air ejector or ejector pump, reference is made to the above description of the first aspect.

A third aspect proposes an aircraft according to claim 14 that has at least one air-conducting structure according to the first aspect and/or at least one air ejector or ejector pump according to the second aspect.

For the advantages and variants of the air ejector or ejector pump, reference is made to the above description of the first aspect.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF DESCRIPTION OF THE DRAWINGS

The invention is explained below with reference to the figures in the drawings. In the figures:
- Fig. 1: shows an air-conducting structure for an aircraft in a schematic sectional view,
- Fig. 2: shows a plan view or front view of a vaned rotor with an integrated drive element of the air-conducting structure from Figure 1, viewed from a section axis A-A,
- Fig. 3: shows an air-conducting structure for an aircraft with optional variants in a schematic sectional view, and
- Fig. 4: shows a plan view or front view of a vaned rotor with an integrated drive element of the air-conducting structure from Figure 3, viewed from a section axis A-A.

In the figures, the same reference signs denote identical or functionally identical components, unless otherwise indicated.

### DETAILED DESCRIPTION OF EXEMPLARY EMBODIMENTS OF THE INVENTION

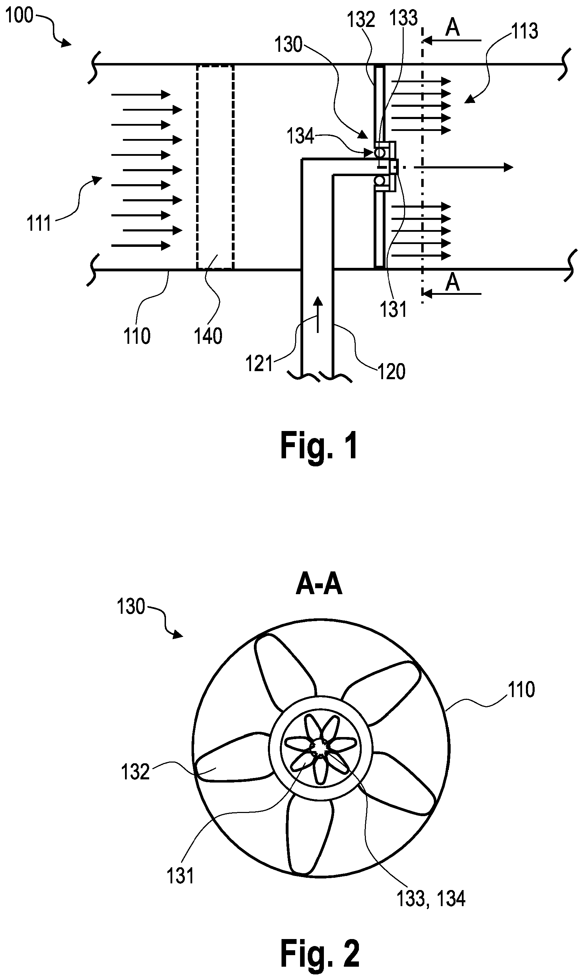

Figure 1 schematically shows an air-conducting structure 100, which is suitable for conducting and/or guiding air in an aircraft. The air-conducting structure 100 can for example be used for air exchange, for discharging exhaust air, for machine cooling or engine cooling, for air conditioning, as engine bay venting etc. of the aircraft. The air-conducting structure 100 can for example form an air ejector for the aforementioned purposes, for example, or be part of same.

The air-conducting structure 100 has a first duct portion 110, which is configured to conduct, for example to guide, to push through etc., a first air stream 111. In Figure 1, a number of arrows indicate the intended flow direction through the first duct portion 110. It should be noted that Figure 1 only shows a detail of the first duct portion 110. However, the first duct portion 110 can extend further both upstream, i.e., to the left in Figure 1, and downstream, i.e., to the right in Figure 1. Upstream, the first duct portion 110 can be fluid-connected to a first airflow source, wherein the first airflow source can have air to be discharged and/or generate the first air stream 111. Downstream, the first duct portion 110 can be configured to eject the air stream conducted, for example also conveyed, thereby, that is, at least the first air stream 111, and/or supply same to its intended purpose, for example to discharge it as exhaust air, to generate cooling air therewith, to air-condition the aircraft therewith, etc. In addition, the first duct portion 110 can have a suitable cross section, which is round here by way of example. The first duct portion 110 is manufactured here for example from a metal material, a plastic material or another suitable material. The material can also be heat- or temperature-resistant, for example if the second air stream, for example, is provided at a high temperature, for example by or from bleed air, in particular engine bleed air, or the like, and/or the air-conducting structure 100 and/or the ejector pump equipped therewith is used at a high ambient temperature.

In addition, the air-conducting structure 100 has a second duct portion 120. The second duct portion 120 opens fluidically into the first duct portion 110. The second duct portion 120 is configured to conduct/guide a second air stream 121 that is different from the first air stream 111. In Figure 1, an arrow indicates the intended flow direction through the second duct portion 120. The second duct portion 120 can again extend further downstream, i.e., in Figure 1, and be fluid-connected there to a second airflow source, such as a machine, an engine, bleed air, engine bleed air or the like, wherein the second airflow source can generate the second air stream 121. The first air stream 111 and the second air stream 121 can differ from one another in particular in terms of fluidics, for example have different pressures, flow speeds, mass flows etc. As mentioned above, the second duct portion 120 opens into the first duct portion 110. As shown by way of example in Figure 1, the second duct portion 120 leads for example into the first duct portion 110 in some portions. To this end, the second duct portion 120 can pass through a wall or a material of the first duct portion 110, in particular from a circumferential direction and/or from a radial direction. An exit opening (not shown in detail) of the second duct portion 120 can likewise be arranged radially inside the first duct portion 110. As shown by way of example in Figure 1, an axial axis of the exit opening can be oriented at least approximately the same as an axial axis of the first duct portion. This means that the second air stream 121 can exit with a direction at least substantially the same as the direction of the first air stream 111. The second duct portion 120 is manufactured here for example from a metal material, a plastic material or another suitable material. The material can also be heat- or temperature-resistant, for example if the second air stream, for example, is provided at a high temperature, for example by bleed air, in particular engine bleed air, or the like, and/or the air-conducting structure 100 and/or the ejector pump equipped therewith is used at a high ambient temperature.

Furthermore, the air-conducting structure 100 has a vaned rotor 130. The vaned rotor 130 is arranged in the first duct portion 110 and is configured to convey air through the first duct portion 110. As indicated in Figure 1 with arrows, the vaned rotor 130 can be configured to suck in the first air stream 111 on an intake side and to generate a third air stream 113 on a pressure side. A distinction is made conceptually between the first air stream 111 and the third air stream 113 mainly because the vaned rotor 130 changes the first air stream 111 fluidically, in particular accelerates it, or boosts it in comparison with a conventional ejector pump based on pure air intake. In addition, the third air stream 113 can also at least partially comprise the second air stream 121, which is guided in the first duct portion 110. The vaned rotor 130 can also be configured to move the third air stream 113 with a mass flow 121 that is greater than a mass flow of the first air stream 111.

The vaned rotor 130 is arranged such that it can be driven by means of the second air stream 121. In addition, the vaned rotor 130 can be designed without an active drive, such as an electrical drive, and/or purely mechanically. For the drive, the vaned rotor 130 has a drive element 131, which is fluid-coupled to the second duct portion 120 or arranged in same. The second air stream 121 thus flows against and/or through the drive element 131 and thereby drives it. In this case, the second air stream 121 can also be the sole drive source of the drive element 131 and/or of the vaned rotor 130. For example, the drive element 131 can be arranged in or at an opening portion of the second duct portion 120 towards the first duct portion 110, as shown by way of example in Figure 1. In this case, the drive element 131 can be geometrically adapted at least substantially to the second duct portion 120, in particular to the cross section thereof. The drive element can have a drive wheel, which is arranged in or at the opening portion of the second duct portion 120 towards the first duct portion 110.

The vaned rotor 130 also has an impeller 132, which is configured to convey air through the first duct portion 110. To this end, the impeller 132 can be arranged inside an internal cross section of the first duct portion 110. The impeller 132 is arranged radially outwards of the drive element 131, for example drive wheel. In addition, the drive element 131 and the impeller 132 can have a common rotational axis 133, as shown by way of example in Figure 1. Furthermore, the drive element 131 and the impeller 132 can be coupled to one another for conjoint rotation. To this end, the drive element 131 and the impeller 132 can be connected to one another or formed as a single piece. The drive wheel 131, when it converts kinetic energy driven by the second air stream 121, can thereby drive or carry along the impeller 132 for a corresponding rotational movement. As shown by way of example in Figure 1, the impeller 132 can be larger, even substantially larger, than the drive element 131. By this and/or by an additional gearing system or the like, a speed ratio or reduction ratio can be formed between the drive element 131 and the impeller 132. The impeller 132 can thus be driven at the desired rotation speed and/or with the desired torsional force. The vaned rotor 130 can be mounted on the first and/or second duct portion 110, 120 via at least one mount or bearing 134. The mount or bearing 134 can be designed for example as a ball bearing, but other types of bearing are also possible.

In functional terms, the second air stream 121 can also be regarded or referred to as a primary air stream, since it is used to convey the first air stream 111 and/or to generate the third air stream 113, i.e., a consequently secondary air stream, and/or to drive the vaned rotor 130, in particular the impeller 132, which is fluidically effective at least substantially in the first duct portion 110.

Furthermore, the air-conducting structure 100 can have at least one heat exchanger 140, which is configured to act thermally on at least the first air stream 111 or else is configured such that the air stream 111 acts thermally on the heat exchanger 140. To this end, the heat exchanger 140 can be fluid-connected to a corresponding feed line and discharge line, a cooling medium or the like. The heat exchanger 140 can be arranged inside the first duct portion 110. In addition, at least the first air stream 111 can flow through and/or around the heat exchanger 140 in order to effect a heat exchange with same. Purely by way of example, the heat exchanger 140 in Figure 1 is arranged upstream of the second duct portion 120, in particular its opening portion towards the first duct portion 110. However, it is conceivable to arrange the heat exchanger 140 also downstream thereof or to provide a further heat exchanger there.

Figure 2 shows a schematic plan view or front view of the vaned rotor 130 from Figure 1, viewed from the section axis A-A indicated in Figure 1. In relation to the rotational axis 133, the impeller 132 is arranged radially outwards of the drive wheel 131.

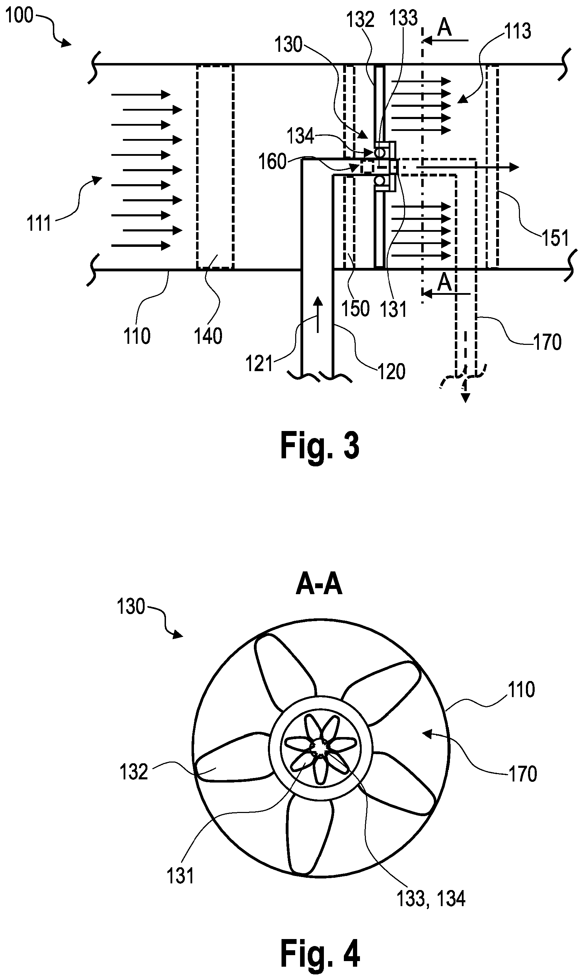

Figure 3 shows the air-conducting structure 100 with optional variants, of which one or more can be provided, also in combination, in comparison with the above-described exemplary embodiment. These optional variants are illustrated with dashed lines in Figure 3.

The air-conducting structure 100 can thus also have an optional upstream guide wheel 150, which can also be designed, regarded and/or referred to as a type of stator. This can be arranged in the first duct portion 110. The upstream guide wheel 150 can be arranged upstream of the vaned rotor 130, in particular of the impeller 132 thereof. The upstream guide wheel 150 can be used to generate a swirl in the flow, in particular in the first air stream 111.

In addition, the air-conducting structure 100 can have an optional downstream guide wheel 151, which can also be designed, regarded and/or referred to as a type of stator. This can be arranged in the first duct portion 110. The downstream guide wheel 151 can be arranged downstream of the vaned rotor 130, in particular of the impeller 132 thereof. The downstream guide wheel 151 can be used to influence a swirl in the flow, in particular in the third air stream 113.

The air-conducting structure can also have an optional upstream turbine guide wheel 160, which can also be designed, regarded and/or referred to as a type of stator. This can be arranged in the second duct portion 110. The upstream turbine guide wheel 160 can be arranged upstream of the vaned rotor 130, in particular of the drive wheel 131 thereof. The upstream turbine guide wheel 160 can be used to influence a swirl in the flow, in particular in the second air stream 121.

Furthermore, the air-conducting structure 100 can have an optional discharge means 170 for the second air stream 121 driving the vaned rotor 130 or the drive wheel 131 thereof. This discharge means 170 can also be referred to as a third duct portion. The discharge means 170 and/or the second duct portion 120 and/or the vaned rotor 130 can (each) be configured, for example designed and/or arranged, such that the second duct portion 120 opens fluidically into the discharge means 170. Via the discharge means 170, the corresponding air stream, that is, at least substantially the second air stream 121, can be discharged and optionally reused for further purposes. If the optional discharge means 170 is provided, there is no or at least only a reduced mixing of the second air stream 121 and the first air stream 111. It should be noted that, if the optional discharge means 170 is provided, the at least one heat exchanger 140 can also be provided or arranged downstream of the opening portion of the second duct portion 120 into the discharge means 170. The air-conducting structure 100 with the optional discharge means 170 can be referred to as an air ejector. Without the optional discharge means 170, the air-conducting structure 100, in particular that according to Figure 1, can be referred to as an optionally extended ejector pump.

Figure 4 shows a schematic plan view or front view of the vaned rotor 130 from Figure 3, viewed from the section axis A-A indicated in Figure 3. In relation to the rotational axis 133, the impeller 132 is arranged radially outwards of the drive wheel 131. In addition, the second duct portion 120 opens into the optional discharge means 170 at or close to the vaned rotor 130.

Proceeding from the above-described exemplary embodiments, the air-conducting structure 100 can be modified in many ways. The arrangement of impeller 132 and optional upstream guide wheel 150 (see Figure 3) can thus also be designed to have multiple stages. In addition, the arrangement of drive wheel 131 and optional upstream turbine guide wheel 160 can also be designed to have multiple stages. Furthermore, each wheel described herein, that is, the vaned rotor 130, the optional upstream guide wheel 150, the optional downstream guide wheel 151 and/or the optional upstream turbine guide wheel 160, can have a gearing system or generally a reduction ratio or speed ratio. These wheels can also each have a mount or bearing and/or be mounted. For example, the respective mount can have a ball bearing, but other mounts are also possible. A gearing system, or generally a speed ratio or reduction ratio, can also be integrated into the respective mount.

The air-conducting structure 100 can form an air ejector, in particular with the optional discharge means 170, or an ejector pump, in particular according to Figure 1, for use in an aircraft.

### LIST OF REFERENCE SIGNS

- 100: Air-conducting structure (also air ejector or (extended) ejector pump)
- 110: First duct portion
- 111: First air stream
- 113: Third air stream
- 120: Second duct portion
- 121: Second air stream
- 130: Vaned rotor (e.g. compressor rotor or fan)
- 131: Drive element (e.g. turbine rotor)
- 132: Impeller
- 133: Rotational axis
- 134: Mount/bearing
- 140: Heat exchanger
- 150: Upstream guide wheel (e.g. compressor stator)
- 151: Downstream guide wheel
- 160: Upstream turbine guide wheel (e.g. turbine stator)
- 170: Discharge duct

## Claims

1. Air-conducting structure (100) for an aircraft, having:
a first duct portion (110), which is configured to conduct a first air stream (111),
a second duct portion (120), which opens into the first duct portion (110) and is configured to conduct a second air stream (121), and
a vaned rotor (130), which is arranged in the first duct portion (110) such that it can be driven by means of the second air stream (121), and which has a drive element (131), which is fluid-coupled to the second duct portion (120) such that the second air stream (121) flows against and/or through the drive element (131) and thereby drives it, and an impeller (132), which is configured to convey air through the first duct portion (110), wherein the impeller (132) is arranged radially outwards of the drive element (131).

2. Air-conducting structure (100) according to claim 1, wherein the vaned rotor (130) is configured to convey air through the first duct portion (110), to suck in the first air stream (111) on an intake side, and/or to generate a third air stream (113) on a pressure side.

3. Air-conducting structure (100) according to claim 2, wherein the vaned rotor (130) is configured to generate the third air stream (113) with a mass flow (121) that is greater than a mass flow of the first air stream (111).

4. Air-conducting structure (100) according to any one of the preceding claims, wherein the impeller (132) is arranged inside an internal cross section of the first duct portion (110).

5. Air-conducting structure (100) according to any one of the preceding claims, wherein the drive element (131) has a drive wheel, which is arranged in or at an opening portion of the second duct portion (120) towards the first duct portion (110).

6. Air-conducting structure (100) according to any one of the preceding claims, wherein the drive element (131) and the impeller (132) have a common rotational axis (133).

7. Air-conducting structure (100) according to any one of the preceding claims, wherein the drive element (131) and the impeller (132) are coupled to one another for conjoint rotation.

8. Air-conducting structure (100) according to one of the preceding claims, further having a heat exchanger (140), which is configured to act thermally on at least the first air stream (111).

9. Air-conducting structure (100) according to one of the preceding claims, further having an upstream guide wheel (150), which is arranged in the first duct portion (110) upstream of the vaned rotor (130).

10. Air-conducting structure (100) according to one of the preceding claims, further having a downstream guide wheel (151), which is arranged in the first duct portion (110) downstream of the vaned rotor (130).

11. Air-conducting structure (100) according to one of the preceding claims, further having an upstream turbine guide wheel (160), which is arranged in the second duct portion (120) upstream of the drive element (131).

12. Air-conducting structure (100) according to one of the preceding claims, further having a discharge means (170), into which the second duct portion (120) fluidically opens.

13. Air ejector or ejector pump for an aircraft, having an air-conducting structure (100) according to one of the preceding claims, wherein the first duct portion (110) is configured to be fluid-coupled to a first airflow source, and the second duct portion (120) is configured to be fluid-coupled to a second airflow source.

14. Aircraft, having an air-conducting structure (100) according to one of claims 1 to 12 and/or having an air ejector or ejector pump according to claim 13.

## Patentansprüche

1. Luftleitstruktur (100) für ein Luftfahrzeug, aufweisend:
einen ersten Kanalabschnitt (110), der dazu eingerichtet ist, einen ersten Luftstrom (111) zu leiten,
einen zweiten Kanalabschnitt (120), der in den ersten Kanalabschnitt (110) mündet und dazu eingerichtet ist, einen zweiten Luftstrom (121) zu leiten, und
einen beschaufelten Rotor (130), der in dem ersten Kanalabschnitt (110) derart angeordnet ist, dass er mittels des zweiten Luftstroms (121) antreibbar ist, und der ein Antriebselement (131) aufweist, das derart mit dem zweiten Kanalabschnitt (120) fluidisch gekoppelt ist, dass der zweite Luftstrom (121) entgegen dem und/oder durch das Antriebselement (131) strömt und es dadurch antreibt,
und ein Laufrad (132), das dazu eingerichtet ist, Luft durch den ersten Kanalabschnitt (110) zu fördern, wobei das Laufrad (132) radial außerhalb des Antriebselements (131) angeordnet ist.

2. Luftleitstruktur (100) nach Anspruch 1, wobei der beschaufelte Rotor (130) dazu eingerichtet ist, Luft durch den ersten Kanalabschnitt (110) zu fördern, den ersten Luftstrom (111) auf einer Ansaugseite anzusaugen und/oder einen dritten Luftstrom (113) auf einer Druckseite zu erzeugen.

3. Luftleitstruktur (100) nach Anspruch 2, wobei der beschaufelte Rotor (130) dazu eingerichtet ist, den dritten Luftstrom (113) mit einem Massenstrom (121) zu erzeugen, der größer ist als ein Massenstrom des ersten Luftstroms (111).

4. Luftleitstruktur (100) nach einem der vorhergehenden Ansprüche, wobei das Laufrad (132) innerhalb eines Innenquerschnitts des ersten Kanalabschnitts (110) angeordnet ist.

5. Luftleitstruktur (100) nach einem der vorhergehenden Ansprüche, wobei das Antriebselement (131) ein Antriebsrad aufweist, das in oder an einem Mündungsabschnitt des zweiten Kanalabschnitts (120) hin zu dem ersten Kanalabschnitt (110) angeordnet ist.

6. Luftleitstruktur (100) nach einem der vorhergehenden Ansprüche, wobei das Antriebselement (131) und das Laufrad (132) eine gemeinsame Drehachse (133) aufweisen.

7. Luftleitstruktur (100) nach einem der vorhergehenden Ansprüche, wobei das Antriebselement (131) und das Laufrad (132) zueinander drehfest miteinander gekoppelt sind.

8. Luftleitstruktur (100) nach einem der vorhergehenden Ansprüche, ferner aufweisend einen Wärmetauscher (140), der dazu eingerichtet ist, auf zumindest den ersten Luftstrom (111) thermisch einzuwirken.

9. Luftleitstruktur (100) nach einem der vorhergehenden Ansprüche, ferner aufweisend ein Vorleitrad (150), das in dem ersten Kanalabschnitt (110) stromaufwärts des beschaufelten Rotors (130) angeordnet ist.

10. Luftleitstruktur (100) nach einem der vorhergehenden Ansprüche, ferner aufweisend ein Nachleitrad (151), das in dem ersten Kanalabschnitt (110) stromabwärts des beschaufelten Rotors (130) angeordnet ist.

11. Luftleitstruktur (100) nach einem der vorhergehenden Ansprüche, ferner aufweisend ein Turbinenvorleitrad (160), das in dem zweiten Kanalabschnitt (120) stromaufwärts des Antriebselements (131) angeordnet ist.

12. Luftleitstruktur (100) nach einem der vorhergehenden Ansprüche, ferner aufweisend ein Abführungsmittel (170), in das der zweite Kanalabschnitt (120) fluidisch mündet.

13. Luftauswerfer oder Ejektorpumpe für ein Luftfahrzeug, aufweisend eine Luftleitstruktur (100) nach einem der vorhergehenden Ansprüche, wobei der erste Kanalabschnitt (110) dazu eingerichtet ist, mit einer ersten Luftströmungsquelle fluidisch gekoppelt zu sein, und der zweite Kanalabschnitt (120) dazu eingerichtet ist, mit einer zweiten Luftströmungsquelle fluidisch gekoppelt zu sein.

14. Luftfahrzeug, aufweisend eine Luftleitstruktur (100) nach einem der Ansprüche 1 bis 12 und/oder aufweisend einen Luftauswerfer oder eine Ejektorpumpe nach Anspruch 13.

## Revendications

1. Structure de guidage d'air (100) pour un aéronef, comprenant :
une première partie de conduit (110) conçue pour guider un premier flux d'air (111),
une seconde partie de conduit (120), qui s'ouvre dans la première partie de conduit (110) et est conçue pour guider un deuxième flux d'air (121), et
un rotor à ailettes (130), qui est disposé dans la première partie de conduit (110) de sorte à pouvoir être entraîné au moyen du deuxième flux d'air (121), et qui comporte un élément d'entraînement (131), qui est accouplé de manière fluidique à la seconde partie de conduit (120) de sorte que le deuxième flux d'air (121) s'écoule contre et/ou à travers l'élément d'entraînement (131) et l'entraîne ainsi,
et une turbine (132), qui est conçue pour acheminer l'air à travers la première partie de conduit (110), la turbine (132) étant disposée radialement vers l'extérieur de l'élément d'entraînement (131).

2. Structure de guidage d'air (100) selon la revendication 1, le rotor à ailettes (130) étant conçu pour acheminer l'air à travers la première partie de conduit (110), pour aspirer le premier flux d'air (111) d'un côté aspiration, et/ou pour générer un troisième flux d'air (113) d'un côté pression.

3. Structure de guidage d'air (100) selon la revendication 2, le rotor à ailettes (130) étant conçu pour générer le troisième flux d'air (113) avec un flux massique (121) qui est supérieur à un flux massique du premier flux d'air (111).

4. Structure de guidage d'air (100) selon l'une quelconque des revendications précédentes, la turbine (132) étant disposée à l'intérieur d'une section transversale interne de la première partie de conduit (110).

5. Structure de guidage d'air (100) selon l'une quelconque des revendications précédentes, l'élément d'entraînement (131) présentant une roue motrice, qui est disposée dans ou au niveau d'une partie d'ouverture de la seconde partie de conduit (120) vers la première partie de conduit (110).

6. Structure de guidage d'air (100) selon l'une quelconque des revendications précédentes, l'élément d'entraînement (131) et la turbine (132) ayant un axe de rotation commun (133).

7. Structure de guidage d'air (100) selon l'une quelconque des revendications précédentes, l'élément d'entraînement (131) et la turbine (132) étant accouplés l'un à l'autre pour une rotation conjointe.

8. Structure de guidage d'air (100) selon l'une des revendications précédentes, comprenant en outre un échangeur de chaleur (140), qui est conçu pour agir thermiquement sur au moins le premier flux d'air (111).

9. Structure de guidage d'air (100) selon l'une quelconque des revendications précédentes, comprenant en outre une roue de guidage amont (150), qui est disposée dans la première partie de conduit (110) en amont du rotor à ailettes (130).

10. Structure de guidage d'air (100) selon l'une quelconque des revendications précédentes, comprenant en outre une roue de guidage aval (151), qui est disposée dans la première partie de conduit (110) en aval du rotor à ailettes (130).

11. Structure de guidage d'air (100) selon l'une quelconque des revendications précédentes, comprenant en outre une roue de guidage de turbine amont (160), qui est disposée dans la seconde partie de canal (120) en amont de l'élément d'entraînement (131).

12. Structure de guidage d'air (100) selon l'une quelconque des revendications précédentes, comprenant en outre un moyen de décharge (170) dans lequel débouche fluidiquement la seconde partie de conduit (120).

13. Éjecteur d'air ou pompe d'éjection pour un aéronef, présentant une structure de guidage d'air (100) selon l'une des revendications précédentes, la première partie de conduit (110) étant conçue pour être accouplée fluidiquement à une première source de flux d'air, et la seconde partie de conduit (120) étant conçue pour être accouplée fluidiquement à une seconde source de flux d'air.

14. Aéronef comportant une structure de guidage d'air (100) selon l'une des revendications 1 à 12 et/ou comportant un éjecteur d'air ou une pompe à éjecteur d'air selon la revendication 13.
